# EUROPEAN PATENT SPECIFICATION

(11) **EP 4 159 607 B1**
(45) Date of publication and mention of the grant of the patent: **23.07.2025**
(21) Application number: 22195880.4
(22) Date of filing: 15.09.2022
(51) Int. Cl.: B62K 5/10, B62K 5/027, B62K 5/05, B62K 5/08, B60G 17/016, B60G 17/017

(54) **LEAN CONTROL DEVICE AND LEANING VEHICLE**
LEAN-STEUERVORRICHTUNG UND NEIGEFAHRZEUG
DISPOSITIF DE COMMANDE D'INCLINAISON ET VÉHICULE INCLINABLE

(30) Priority: 30.09.2021 JP 2021161477
(43) Date of publication of application: 05.04.2023
(73) Proprietor: Yamaha Hatsudoki Kabushiki Kaisha, Iwata-shi, Shizuoka 438-8501 (JP)
(72) Inventor: UCHIYAMA, Toshifumi, Shizuoka, 438-8501 (JP); NAGATA, Tatsuya, Shizuoka, 438-8501 (JP); KANEHARA, Masatomo, Shizuoka, 438-8501 (JP)
(74) Representative: Stöckeler, Ferdinand

(56) References cited:
- EP-A1- 3 301 000
- WO-A1-2021/045112

## Description

### Technical Field

The present teaching relates to a lean control device and a leaning vehicle.

### Background Art

A leaning vehicle rider controls the amount of leaning of the vehicle body in accordance with the running condition. For example, when the leaning vehicle is turning, the rider leans the vehicle body towards the side of the turn intended to make. When the leaning vehicle is at a stop, the rider keeps the vehicle body substantially upright. There have been leaning vehicles that include an assisting device that assists the rider in adjusting the amount of leaning of the vehicle body.

For example, Patent Document 1 discloses a leaning vehicle that includes a controller, and a stand-up mechanism that receives instructions from the controller and then adjusts the amount of leaning of the vehicle body. While the leaning vehicle is moving as normal, the controller controls the stand-up mechanism in such a manner that the amount of leaning of the vehicle body does not exceed a specified value. When the leaning vehicle is at a stop, the controller controls the stand-up mechanism in such a manner that the vehicle body is kept upright.

Patent Document 2 discloses a leaning vehicle that includes a control device that permits the rider to choose one from various modes of leaning amount control in accordance with the driving conditions. This control device can execute first leaning control to assist the rider in adjusting the amount of leaning of the vehicle body while the vehicle is moving and can execute second leaning control to make the vehicle body stand up by itself without any support from the rider while the leaning vehicle is at a stop. The second leaning control includes high-rigidity stand-up control that is executable while the vehicle speed is in a very low speed range or zero. The amount of leaning of the vehicle body is assisted by use of an actuator, such as a motor installed in the leaning vehicle, or the like.

### Citation List

### Patent Literature

Patent Literature 1: U.S. Patent Application Publication No. 2012/0181765
Patent Literature 2: Japanese Patent Application Publication No. 2018-52308
Patent Literature 3: European Patent Application EP 3301000 A1 disclosing a rocking control device for two front wheels rocking vehicle.

Document EP 3 301 000 A1 discloses a leaning tricycle comprising a lean actuator and a lean control device providing a gravity compensation control for when the vehicle is moving and a self-standing assist control for when the vehicle is moving at low speeds or at a stoppage. For both modes an individual on/off switch is provided.

Document WO 2021/045112 A1 discloses a leaning tricycle comprising lean actuator and a lean control device providing a gravity compensation control for lowering/raising the parked vehicle on/off its side stand and a self-standing assist control for keeping the parked vehicle standing straight by means of the actuator only. A remote control or mounted switch allows switching between the two modes.

### Summary of Invention

### Technical Problem

A problem to be solved by the present teaching is to make it possible to assist a leaning vehicle in a stopped state in standing by itself and make it easier to start the leaning vehicle and make it easier to walk the leaning vehicle. Solution to Problem

The present inventors conducted studies to come up with a solution to the problem, and they obtained the following findings. According to Patent Literatures 1 and 2, when the leaning vehicle is at a stop, an actuator applies a strong torque to the vehicle body to prevent the vehicle body from leaning. Accordingly, the vehicle body is kept standing upright with little or no support from the rider. However, generally, when a rider walks a leaning vehicle, the rider leans the vehicle body to a certain degree. If the vehicle body is kept upright at that time, the rider cannot walk the leaning vehicle with ease. In addition, in order to turn around the leaning vehicle from a stopped state, or the like, the rider would try to lean the vehicle body almost at the same time as starting the leaning vehicle. If the leaning vehicle is kept upright at that time, the rider cannot start the leaning vehicle with ease.

With respect to this point, according to Patent Literatures 1 and 2, by using a switch or a throttle grip, the rider of the leaning vehicle can cancel the control for keeping the vehicle body upright. This permits the rider to lean the vehicle body immediately after starting the leaning vehicle. When the control for keeping the vehicle body upright is cancelled, however, the rider cannot receive assistance from the leaning vehicle, and the rider must conduct all control on the amount of leaning of the vehicle on their own. Therefore, the rider needs power to walk (and handle) the leaning vehicle.

According to Patent Literature 2, after the high-rigidity stand-up control is cancelled, the leaning vehicle executes cancel offsetting control to gradually decrease the torque of the actuator. The cancel offsetting control is to moderate a rapid torque change following the cancellation of the high-rigid stand-up control. However, for a while after the cancellation of the high-rigid stand-up control, the actuator still applies a strong torque to the vehicle body, and the rider needs a certain degree of experience and skill to walk the leaning vehicle or to start the leaning vehicle with ease.

Then, the present inventors conceived of the following idea: if the rider can select one from among a self-standing assist control and other controls for adjusting the leaning amount when the leaning vehicle is at a stop, the leaning vehicle will be assisted in standing by itself, and the rider will be able to start the leaning vehicle and will be able to walk the leaning vehicle with ease. The present invention has been made based on the findings and ideas.
(1) A lean control device according to the present invention is defined by claim 1. Said lean control device is installed in a leaning vehicle that includes at least three wheels and a prime mover, the at least three wheels including two steerable wheels arranged side by side in a left-right direction, and that leans the steerable wheels and a vehicle body leftward when making a left turn and leans the steerable wheels and the vehicle body rightward when making a right turn. The lean control device controls an actuator that is capable of applying output torques to the vehicle body in directions to lean the vehicle body leftward and rightward and to raise the vehicle body upright. The lean control device is capable of executing at least a gravity compensation control and a self-standing assist control. When a condition for a switch of control is satisfied, the lean control device instructs the actuator to conduct a switch between the gravity compensation control and the self-standing assist control. The gravity compensation control is executable when the leaning vehicle is at a speed equal to or lower than a first speed and is to instruct the actuator to apply output torques in directions towards a return to an upright state of the leaning vehicle. The self-standing control is executable when the leaning vehicle is at a speed equal to or lower than a second speed and is to instruct the actuator to apply output torques in directions to keep the leaning vehicle in the upright state. The output torque, at least when the leaning vehicle is at a stop and when the gravity compensation control is being executed, is greater than zero and smaller than a leaning moment. The output torque, at least when the leaning vehicle is at a stop, when the vehicle body leans at an angle within a substantially self-standing range and when the self-standing assist control is being executed, is greater than the leaning moment. The leaning moment is a moment that acts on the vehicle body due to gravity when the vehicle body leans. The second speed is lower than, equal to or higher than the first speed.

The lean control device described in Section (1) above is capable of executing a plurality of controls that are different in the output torque when the leaning vehicle is at a stop. For example, while the leaning vehicle is at a stop, with the self-standing assist control, the leaning vehicle can stand by itself without any support from the rider. When the leaning vehicle is to be started or to be walked, the self-standing assist control is switched to the gravity compensation control, and thereby, the rider can freely lean the leaning vehicle to a certain degree. Thus, the leaning vehicle, when it is in a stopped state, is assisted in standing by itself, and it becomes easy to start the leaning vehicle and becomes easy to walk the leaning vehicle.

(2) The lean control device described in Section (1) above may be configured as follows. In at least either one of a case of switching from the gravity compensation control to the self-standing assist control and a case of switching from the self-standing assist control to the gravity compensation control, the lean control device instructs the actuator to change the output torque gradually.

The lean control device described in Section (2) above can moderate a sudden change of the output torque at the time of a switch between the gravity compensation control and the self-standing assist control. This facilitates the rider to keep the balance of the leaning vehicle.

(3) The lean control device described in Section (1) is according to the invention further configured as follows. When at least a condition that the leaning vehicle is at a speed equal to or lower than a threshold, the lean control device instructs the actuator to conduct a switch between the gravity compensation control and the self-standing assist control. The threshold is a value neither greater than the first speed nor greater than the second speed.

With the lean control device described in Section (3) above, the condition for a switch of control is satisfied when the speed of the leaning vehicle is equal to or lower than the threshold. For example, by setting the threshold to a low speed, it becomes possible to conduct a switch between the gravity compensation control and the self-standing assist control when the speed of the leaning vehicle is within a low speed range.

(4) The lean control device described in any one of Sections (1) to (3) above may be configured as follows. (A) While the leaning vehicle is decelerating and is in a state in which the gravity compensation control is being executed and the self-standing assist control is executable, upon receiving a specified input from a rider, the lean control device instructs the actuator to conduct a switch from the gravity compensation control to the self-standing assist control. (B) While the leaning vehicle is accelerating and is in a state in which the self-standing assist control is being executed and the gravity compensation control is executable, when the self-standing assist control becomes inexecutable due to an increase in the speed of the leaning vehicle to a speed higher than the second speed or when the lean control device receives a specified input from a rider, the lean control device instructs the actuator to conduct a switch from the self-standing assist control to the gravity compensation control.

The lean control device may carry out control both in the manners (A) and (B) or may carry out control only in either the manner (A) or the manner (B).

In the lean control device described in Section (4) above, the condition for a switch of control is different depending on whether the leaning vehicle is decelerating or accelerating. More specifically, when the leaning vehicle is decelerating, the condition for a switch of control is stricter, and the self-standing assist control is not executed unless the rider clearly expresses their intention to switch the control. Accordingly, for example, while the rider is decelerating the leaning vehicle and driving the leaning vehicle at a low speed, unnecessary execution of the self-standing assist control is prevented. On the other hand, while the leaning vehicle is accelerating, the condition for a switch of control is eased. Accordingly, for example, when the rider is about to start the leaning vehicle for a run, even if the rider forgets to perform a specified input operation to switch the control, the self-standing assist control is switched to the gravity compensation control, and thereby, the rider can lean the vehicle body and can start the leaning vehicle.

(5) Aleaning vehicle according to the present teaching includes the lean control device described in any one of Sections (1) to (4) above.

The "leaning vehicle" is a transportation means. The leaning vehicle may be a crewed vehicle or an uncrewed transportation means. The leaning vehicle can be a straddled vehicle, for example. The straddled vehicle means a vehicle of which the rider straddles a saddle to sit thereon. The leaning vehicle can be a motor tricycle, for example. The motor tricycle is not particularly limited, and scooter type, moped type, off-road type and on-road type motor tricycles can be named as examples of the motor tricycle. The leaning vehicle is not limited to motor tricycles, and the leaning vehicle may be a four-wheeled motor vehicle, for example. The leaning vehicle is not limited to straddled vehicles, and the leaning vehicle may be a three-wheeled or four-wheeled vehicle or the like with an interior space. For example, the leaning vehicle with an interior space may have a seat on which the rider can sit without straddling.

The leaning vehicle is configured to be able to turn with the vehicle body leaning. The leaning vehicle is configured to make a turn in a posture of leaning inward of the curve to resist the centrifugal force acting on the leaning vehicle during the turn. For example, the leaning vehicle is configured to make a turn following the posture control with the rider's left or right weight shift.

The "steerable wheels" can be steered left and right by the rider. In order to realize this, the leaning vehicle has a steering mechanism. For example, the steering mechanism includes a steering handle, a steering shaft, a pitman arm, a tie rod, a knuckle arm, etc. When the rider handles the steering handle, the steerable wheels are steered left or right via the steering shaft and so on. The steerable wheels are a left-right pair of wheels. The left steerable wheel is located more leftward than the center of the leaning vehicle with respect to the left-right direction. The right steerable wheel is located more rightward than the center of the leaning vehicle with respect to the left-right direction. The steerable wheels may be front wheels or rear wheels. For example, the leaning vehicle may have two front steerable wheels and one or two rear drive wheel(s).

The "prime mover" is a device that generates power for the leaning vehicle. For example, the prime mover may be an engine or an electric motor. The prime mover may be a power unit that is a combination of an engine and an electric motor.

The "actuator" can be an electric motor, for example. The actuator is attached to the vehicle body. The actuator can adjust the amount of leaning of the vehicle body. The actuator can apply output torques to the vehicle body in directions to increase the lean angle of the vehicle body. The actuator also can apply output torques to the vehicle body in directions to decrease the lean angle of the vehicle body. The leaning vehicle has a link mechanism to transmit the torques from the actuator to the vehicle body. The actuator can lean the vehicle body leftward and rightward by applying torque to the link mechanism.

The link mechanism connects, in conjunction, the vehicle body with the steerable wheels. When the link mechanism receives torque from the actuator, the link mechanism operates to lean the vehicle body and the steerable wheels or raise them back upright. Even when the link mechanism does not receive any power from the actuator, the link mechanism enables the vehicle body to be in conjunction with the steerable wheels. For example, when the rider leans the vehicle body leftward, the link mechanism leans the steerable wheels leftward, and when the rider leans the vehicle body rightward, the link mechanism leans the steerable wheels rightward. For example, the link mechanism includes a parallelogram link and a fork-type suspension. The link mechanism may include a suspension tower and a double-wishbone-type suspension.

The "lean control device" can be, for example, an ECU (electric control unit). The lean control device can be, for example, realized by a combination of an IC (integrated circuit), an electronic component, a circuit board, etc. The control executed by the lean control device can be, for example, realized by a CPU (central processing unit) that reads a program stored in a volatile memory and carries out specified processing according the program.

The lean control device is required to be able to execute at least the gravity compensation control and the self-standing assist control, and the lean control device may be able to execute other controls as well. For example, the lean control device may be configured to be able to execute leaning assist control when the speed of the leaning vehicle is greater than the first speed and/or the second speed. The leaning assist control is to assist the vehicle body posture control with the rider's left or right weight shift.

The "gravity compensation control" is to lessen the leaning speed (angular speed) of the vehicle body when the vehicle body is leaning by its own weight. In other words, the gravity compensation control is to support the vehicle body lightly. For example, when the rider walks the leaning vehicle, the gravity compensation control is executed to lighten the weight of the leaning vehicle that the rider bears. For example, when the rider gets on the leaning vehicle and starts the leaning vehicle or drives the leaning vehicle at a low speed, the gravity compensation control is executed to assist the rider keeping balance. The gravity compensation control is executable when the leaning vehicle is at a speed equal to or lower than a predetermined first speed. Although the first speed is not particularly limited, the first speed is 10 km/h, for example. The first speed includes 0 km/h. The gravity compensation control is executable not only when the leaning vehicle is moving at a low speed (including when the rider is walking the leaning vehicle) but also when the leaning vehicle is at a stop. The gravity compensation control is neither to keep the lean angle of the vehicle body nor to keep the leaning vehicle in the upright state. Accordingly, during use of the gravity compensation control, the output torque of the actuator is smaller than a leaning moment. The greater the lean angle of the vehicle body, the greater the leaning moment. During use of the gravity compensation control, the output torque of the actuator is smaller than the leaning moment when the lean angle is an arbitrary angle.

In the gravity compensation control, the lean control device instructs the actuator to apply an output torque in a direction opposite to the direction of the leaning moment. In the gravity compensation control, the lean control device can instruct the actuator to vary the output torque according to the lean angle of the vehicle body. For example, the lean control device instructs the actuator to output a greater torque when the lean angle of the vehicle body becomes greater. However, in the gravity compensation control, the actuator may be instructed to output a constant torque by the lean control device. The lean angle of the vehicle body is the inclination angle of the vehicle body from the upright state. The leaning vehicle may include a lean angle measuring device that measures the lean angle of the vehicle body. The lean angle measuring device is, for example, a roll angle sensor, a roll rate sensor, an IMU (inertial measurement unit), or the like.

The gravity compensation control is executed when the condition for execution of the gravity compensation control is satisfied. The condition is satisfied when the speed of the leaning vehicle is equal to or lower than the first speed. The condition for execution of the gravity compensation control may include a plurality of conditions. For example, the condition for execution of the gravity compensation control may include a throttle opening degree condition in addition to the speed condition. The condition for execution of the gravity compensation control may be satisfied when both the speed condition and the throttle opening degree condition are satisfied. Specifically, when the leaning vehicle is moving without any assistance from the lean control device, if the speed of the leaning vehicle is equal to or lower than the first speed, and if the rider rotates the throttle grip only by an amount equal to or smaller than a specified amount, the gravity compensation control may be executed. The gravity compensation control may be executed automatically or manually.

The "self-standing assist control" is to make the leaning vehicle stand by itself without any support from the rider. For example, when the rider gets on the leaning vehicle in a stopped state, the self-standing assist control is executed to keep the leaning vehicle in the upright state without the rider needing to have their feet on the ground. The self-standing assist control is executable when the leaning vehicle is at a speed equal to or lower than a predetermined second speed. Although the second speed is not particularly limited, the second speed is 8 km/h, for example. The second speed includes 0 km/h. The self-standing assist control is executable not only when the leaning vehicle is at a stop but also when the leaning vehicle is moving at a low speed (including when the rider is walking the leaning vehicle).

In the self-standing assist control, the lean control device instructs the actuator to output a torque in a direction opposite to the direction of the leaning moment. In the self-standing assist control, the lean control device can instruct the actuator to vary the output torque according to the lean angle of the vehicle body. For example, when the lean angle of the vehicle body becomes greater, the lean control device instructs the actuator to output a greater torque. However, in the self-standing assist control, the lean control device may instruct the actuator to output a constant torque. During use of the self-standing assist control, the torque outputted from the actuator is greater than the leaning moment when the lean angle is an arbitrary angle.

The self-standing assist control is executed when the condition for execution of the self-standing assist control is satisfied. The condition is satisfied when the speed of the leaning vehicle is equal to or lower than the second speed. The condition for execution of the self-standing assist control may include a plurality of conditions. For example, the condition for execution of the self-standing assist control may include a throttle opening degree condition in addition to the speed condition. The condition for execution of the self-standing assist control may be satisfied when both the speed condition and the throttle opening degree condition are satisfied. Specifically, when the speed of the leaning vehicle is equal to or lower than the second speed and when the rider does not rotate the throttle grip, the self-standing assist control may be executed. The self-standing assist control may be executed automatically or manually.

In both the self-standing assist control and the gravity compensation control, the lean control device controls the actuator based on the upright state of the leaning vehicle, and the lean control device instructs the actuator to output a torque according to the lean angle of the vehicle body from the upright state of the leaning vehicle. The upright state of the leaning vehicle indicates that the lean angle of the vehicle body is zero whether the leaning vehicle is at a stop or moving. The upright state of the leaning vehicle is different from another state. The other state being when the vehicle body leans while the leaning vehicle is turning with the moment acting on the vehicle body by gravity being balanced with the moment acting on the vehicle body by centrifugal force.

The "substantially self-standing range" is a range of lean angles in which the output torque of the actuator is equal to or greater than the leaning moment. When the lean angle of the vehicle body becomes larger than a certain value, the leaning moment becomes greater than the output torque of the actuator in some cases, depending on the specifications of the actuator. The lean angle of the vehicle body at which the leaning moment becomes greater than the output torque of the actuator is not in the substantially self-standing range. The lower limit of the substantially self-standing range is zero degrees (upright state). The upper limit of the substantially self-standing range is, for example, 15 degrees or more and 20 degrees or less to either the left or right (30 degrees or more and 40 degrees or less to the left and right in total). However, the substantially self-standing range depends on the weight of the leaning vehicle, the position of the center of gravity of the leaning vehicle, and the rated output of the actuator. Therefore, the upper limit of the substantially self-standing range is not particularly limited.

The "second speed" is preferably lower than the "first speed". However, the second speed may be higher than the first speed or equal to the first speed. In sum, the gravity compensation control and the self-standing assist control are executable when the leaning vehicle is at a speed equal to or lower than an arbitrary speed depending on the control specification.

The "condition for a switch of control" is a condition for a switch between the gravity compensation control and the self-standing assist control. When the condition for a switch of control is satisfied, a switch between the gravity compensation control and the self-standing assist control is possible, and when the condition for a switch of control is not satisfied, a switch between the gravity compensation control and the self-standing assist control is not possible.

The condition for a switch of control includes a vehicle speed condition. For example, when the vehicle speed is equal to or lower than a threshold, the vehicle speed condition is satisfied, and it is possible to conduct a switch between the gravity compensation control and the self-standing assist control. The threshold is, for example, a value that is equal to or lower than both the first value and the second value. The condition for a switch of control is preliminarily stored in the memory.

The condition for a switch of control may include a plurality of conditions. For example, the condition for a switch of control may include any of an engine speed condition, a switch condition and a throttle opening degree condition, being in addition to the vehicle speed condition. The engine speed condition is satisfied, for example, when the engine speed is equal to or lower than a specified value. The switch condition is satisfied, for example, when the rider turns on or off a switch set up on the vehicle body. The throttle opening degree condition is satisfied, for example, when the rider does not rotate the throttle grip (when the throttle is completely closed), when the rider rotates the throttle grip (when the throttle is open) or when the rider rotates the throttle grip by a specified amount or more (when the throttle is open to a specific degree or more). The condition for a switch of control may be satisfied when all these conditions are satisfied, or may be satisfied when at least one of these conditions is satisfied.

The condition for a switch of control may differ depending on whether the leaning vehicle is accelerating or decelerating. For example, while the leaning vehicle is decelerating, the condition for a switch of control may be satisfied when all of the vehicle speed condition, the engine speed condition, the switch condition and the throttle opening degree condition are satisfied. On the other hand, while the leaning vehicle is accelerating, the condition for a switch of control may be satisfied, for example, when any of the vehicle speed condition, the engine speed condition, the switch condition and the throttle opening degree condition is satisfied.

Some embodiments of the present teaching will hereinafter be described in detail with reference to the drawings, and the detailed description of the embodiments will provide a clearer picture of the above-mentioned object and other objects, the features, the aspects and the advantages of the present teaching.

The term "and/or" used herein includes one of the associated items in a list and all possible combinations of the associated items. The terms "including", "comprising", or "having", and variations thereof used herein specify the presence of stated features, steps, operations, elements, components, and/or equivalents thereof, and can include one or more of steps, operations, elements, components, and/or their groups.

Unless otherwise defined, all terms (including technical and scientific terms) used herein have the same meanings as commonly understood by one of ordinary skill in the art to which the present teaching pertains. It should be understood that terms, such as those defined in commonly used dictionaries, should be interpreted as having meanings that are consistent with their meanings in the context of the present disclosure and relevant art and should not be interpreted in an idealized or overly formal sense unless expressly so defined herein.

It should be understood that the description of the present teaching discloses a number of techniques and steps. Each of these has individual benefit, and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

In the description given below, for the purpose of explanation, numerous specific details are set forth in order to provide a complete understanding of the present teaching. It will be apparent, however, that those skilled in the art may practice the present teaching without these specific details. The present disclosure is to be considered as an exemplification of the present teaching and is not intended to limit the present teaching to the specific embodiments illustrated by drawings or descriptions below.

### Effect of Invention

The present teaching makes it possible to assist a leaning vehicle in a stopped state to stand by itself and makes it easier to start the leaning vehicle and makes it easier to walk the leaning vehicle.

### Brief Description of Drawings

[FIG. 1] FIG. 1(a) is a side view of a leaning vehicle according to an embodiment of the present teaching, and FIG. 1(b) is a chart showing the relationship between the control carried out by a lean control device according to the embodiment and the speed of the leaning vehicle.
[FIG. 2] FIG. 2 is a front view of the leaning vehicle according to the embodiment, mainly showing a link mechanism of the leaning vehicle.
[FIG. 3] FIG. 3 is a diagram showing a state in which the leaning vehicle shown by FIG. 2 leans leftward.
[FIG. 4] FIG. 4 is a functional block diagram of the lean control device according to the embodiment and peripheral devices.
[FIG. 5] FIG. 5 is a chart showing the relationship between the output torque of an actuator controlled by the lean control device and the traveling time.

### Description of Embodiments

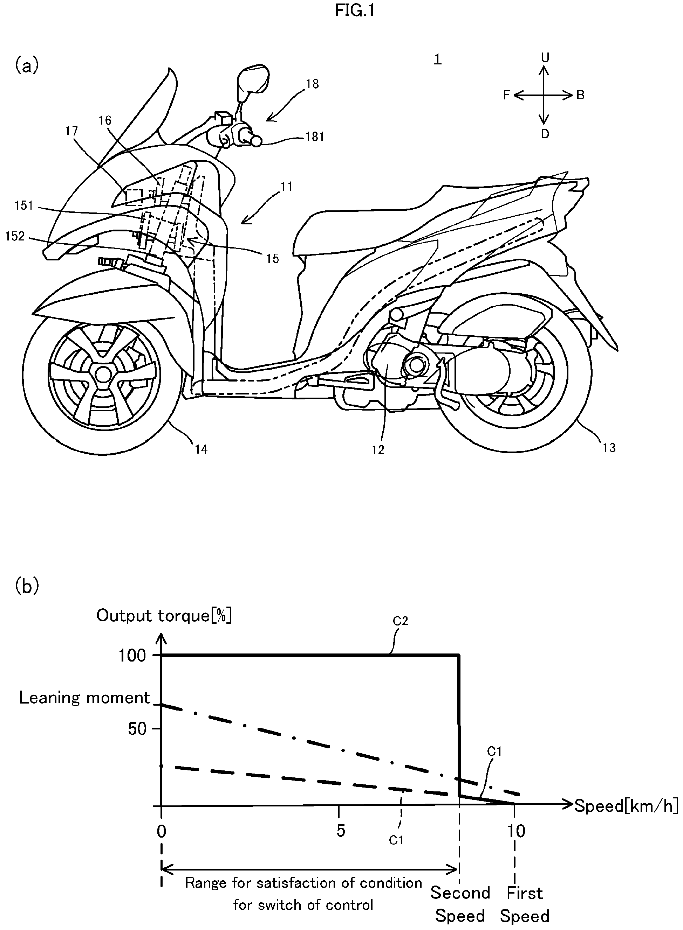

With reference to FIGS. 1(a) and (b), a leaning vehicle according to an embodiment of the present teaching will be generally described. In the following description, up-down direction UD, front-back direction FB, and left-right direction LR are defined based on the upright state of the leaning vehicle.

FIG. 1(a) is a side view of the leaning vehicle according to the present embodiment. The leaning vehicle 1 is, for example, a motor tricycle with two front wheels and one rear wheel. The leaning vehicle 1 includes a vehicle body 11, a prime mover 12, one drive wheel 13, two steerable wheels 14, a link mechanism 15, an actuator 16, and a lean control device 17.

The vehicle body 11 forms the frame of the leaning vehicle 1. The vehicle body 11 is, for example, composed of metal pipes. The vehicle body 11 can lean leftward and rightward.

The prime mover 12 is supported by the vehicle body 11. The prime mover 12 is an engine, for example. The prime mover 12 generates power by burning gasoline or other fuel. The power generated by the prime mover 12 is transmitted to the drive wheel 13 via a drive mechanism, which includes a speed reducer and the like.

The drive wheel 13 serves as a rear wheel. The drive wheel 13 is located in the center of the leaning vehicle 1 with respect to the left-right direction.

The steerable wheels 14 are located more frontward than the drive wheel 13. The steerable wheels 14 serve as front wheels. The steerable wheels 14 are arranged symmetrically in the left-right direction. The steerable wheels 14 are connected to a steering mechanism 18, which includes a steering handle, a steering shaft, a tie rod, a knuckle arm, etc. The steerable wheels 14 can be steered leftward and rightward in accordance with the rider's operation of the steering handle 181, and thereby, it is possible to change the traveling direction of the leaning vehicle 1.

The link mechanism 15 connects the vehicle body 11 and the steerable wheels 14. The link mechanism 15 is a parallelogram link mechanism, for example. The link mechanism 15 will be described in detail later.

The actuator 16 is located substantially above the link mechanism 15. The actuator 16 is an electric motor, for example. The actuator 16 includes a body and an output shaft. The body is attached to the vehicle body 11. The output shaft is connected to the link mechanism 15 via a speed reducer. The actuator 16 applies an output torque to the link mechanism 15, and thereby, a torque in a direction to lean the vehicle body 11 leftward or rightward or to raise the vehicle body 11 upright can be transmitted to the vehicle body 11.

The lean control device 17 is an ECU, for example. The lean control device 17 is attached to the vehicle body 11. The lean control device 17 may be located in the front part or in the rear part of the leaning vehicle 1. The lean control device 17 is electrically connected to the actuator 16. The lean control device 17 sends a signal to the actuator 16 and controls the actuator 16.

FIG. 1(b) is a chart showing the relationship between the control carried out by the lean control device according to the present embodiment and the speed of the leaning vehicle. The lean control device 17 can carry out at least a gravity compensation control C1 and a self-standing assist control C2. In the present embodiment, the lean control device 17 can execute the self-standing assist control C2 when the speed of the leaning vehicle 1 is within a range from zero to a second speed, and can execute the gravity compensation control C1 when the speed of the leaning vehicle 1 is within a range from the second speed to a first speed. The second speed is lower than the first speed. The gravity compensation control C1 is to instruct the actuator 16 to output torques in directions towards a return to an upright state of the leaning vehicle 1. The self-standing assist control C2 is to instruct the actuator to output torques to keep the leaning vehicle 1 upright.

The condition for a switch of control, that is, the condition that permits a switch between the gravity compensation control and the self-standing assist control is satisfied when the speed of the leaning vehicle 1 is equal to or lower than the second speed. When the condition for a switch of control is satisfied, the lean control device 17 instructs the actuator 16 to conduct a switch between the gravity compensation control C1 and the self-standing assist control C2.

For example, when the leaning vehicle 1 is at a stop, the lean control device 17 executes the self-standing assist control C2. The leaning vehicle 1 starts moving and accelerating, and when the speed of the leaning vehicle 1 reaches the second speed, the lean control device 17 cancels the self-standing assist control C2 and executes the gravity compensation control C1. However, the lean control device 17 may conduct a switch from the self-standing assist control C2 to the gravity compensation control C1 when the leaning vehicle 1 becomes a speed lower than the second speed.

Also, for example, while the leaning vehicle 1 is decelerating from a speed higher than the first speed and when the speed of the leaning vehicle 1 becomes the first speed, the lean control device 17 executes the gravity compensation control C1. Then, when the speed of the leaning vehicle 1 becomes the second speed, the lean control device 17 cancels the gravity compensation control C1 and executes the self-standing assist control C2. However, the lean control device 17 may conduct a switch from the gravity compensation control C1 to the self-standing assist control C2 when the speed of the leaning vehicle 1 becomes a speed lower than the second speed.

Thus, in the present embodiment, while the speed of the leaning vehicle 1 is within the range from zero to the second speed, the rider can select whether to execute the gravity compensation control C1 or the self-standing assist control C2.

When the leaning vehicle 1 is at a stop and when the rider selects the gravity compensation control C1, the torque output from the actuator 16 (see dashed line in FIG. 1(b)) is greater than zero and smaller than the leaning moment (see chain line in FIG. 1(b)). During use of the gravity compensation control C1, the output torque of the actuator 16 is smaller than the leaning moment not only when the leaning vehicle 1 is at a stop but also until the speed of the leaning vehicle 1 becomes the first speed, at which the gravity compensation control C1 becomes inexecutable. On the other hand, when the leaning vehicle 1 is at a stop, when the rider selects the self-standing assist control C2 and when the lean angle of the vehicle body 11 is within a substantially self-standing range, the output torque during execution of the self-standing assist control C2 is greater than the leaning moment. During use of the self-standing assist control C2, the output torque of the actuator 16 is greater than the leaning moment not only when the leaning vehicle 1 is at a stop but also until the speed of the leaning vehicle 1 becomes the second speed, at which the self-standing assist control C2 becomes inexecutable. The leaning moment is a moment that acts on the vehicle body 11 due to gravity when the vehicle body 11 leans.

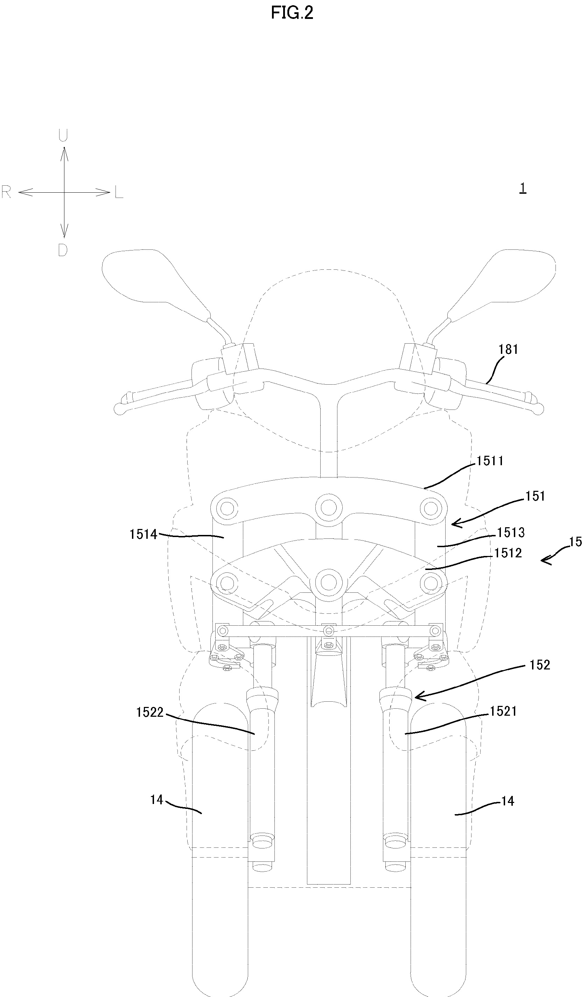

The leaning vehicle according to the present embodiment will be described in more detail below. FIG. 2 is a front view of the leaning vehicle according to the present embodiment, mainly showing the link mechanism.

The link mechanism 15 includes a parallelogram link 151 and a fork-type suspension 152. The parallelogram link 151 is located lower than the steering handle 181 and higher than the steering wheels 14. The parallelogram link 151 includes an upper cross member 1511, a lower cross member 1512, a left side member 1513, and a right side member 1514.

The upper cross member 1511 and the lower cross member 1512 are plate-like members extending substantially in the left-right direction. The upper cross member 1511 and the lower cross member 1512 are supported by the vehicle body 11 at the center with respect to the left-right direction. The upper cross member 1511 and the lower cross member 1512 is supported by the vehicle body 11 in such a manner as to be rotatable around an axis extending in the front-back direction.

The left side member 1513 and the right side member 1514 are bar-like members extending substantially in the up-down direction. The left side member 1513 is fastened to a near-left-end point of the upper cross member 1511 and a near-left-end point of the lower cross member 1512 in such a manner as to be rotatable around the axis extending in the front-back direction. The right side member 1514 is fastened to a near-right-end point of the upper cross member 1511 and a near-right-end point of the lower cross member 1512 in such a manner as to be rotatable around the axis extending in the front-back direction.

The fork-type suspension 152 includes a left fork member 1521 and a right fork member 1522. The left fork member 1521 and the right fork member 1522 are located lower than the parallelogram link and extends substantially in the up-down direction UD. The left fork member 1521 and the right fork member 1522 are telescopic hydraulic dampers. The upper end of the left fork member 1521 is fastened to the lower end of the left side member 1513. The upper end of the right fork member 1522 is fastened to the lower end of the right side member 1514. The lower end of the left fork member 1521 is fastened to the left steerable wheel 14 via a knuckle arm. The lower end of the right fork member 1522 is fastened to the right steerable wheel 14 via a knuckle arm.

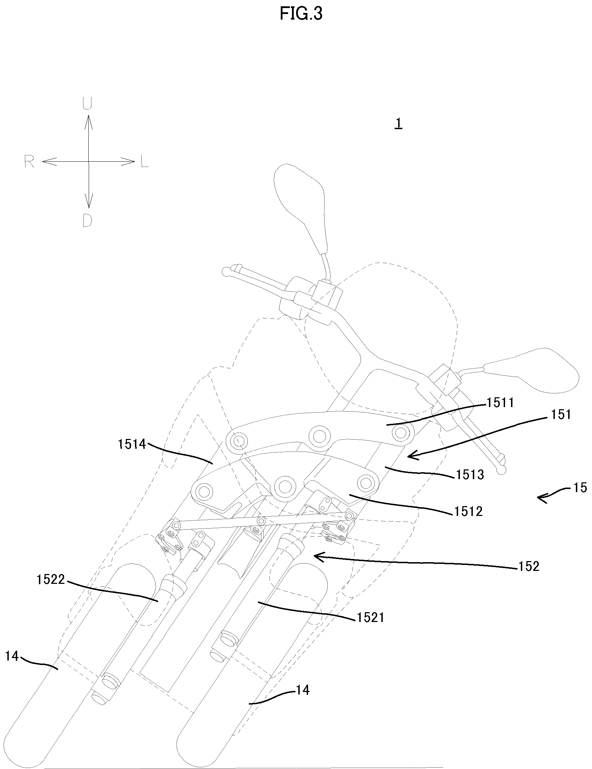

FIG. 3 shows a state in which the leaning vehicle shown by FIG. 2 leans leftward. When the vehicle body 11 of the leaning vehicle 1 that includes the above-described link mechanism 15 leans leftward, the upper cross member 1511 moves leftward while keeping in parallel with the lower cross member 1512, and the left side member 1513 and the right side member 1514 lean leftward. When the vehicle body 11 leans leftward, additionally, the positions of the left and right steerable wheels 14 relative to the vehicle body 11 change. Accordingly, when the leaning vehicle makes a left turn, the steerable wheels 14 lean leftward together with the vehicle body 11, and when the leaning vehicle makes a right turn, the steerable wheels 14 lean rightward together with the vehicle body 11.

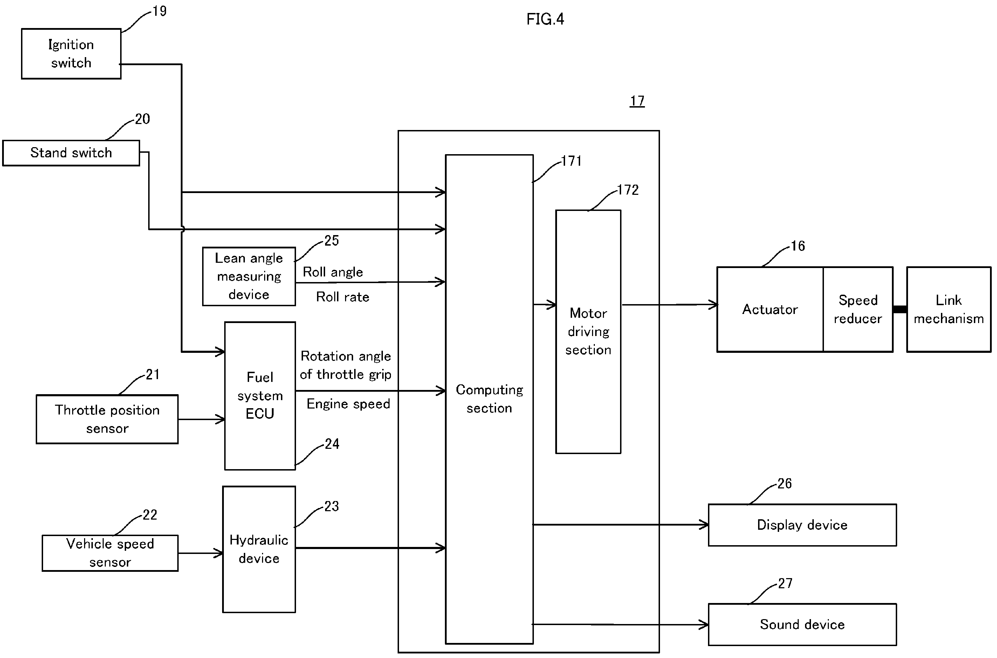

FIG. 4 is a functional block diagram of the lean control device according to the present embodiment and peripheral devices. The leaning vehicle 1 includes an ignition switch 19, a stand switch 20, a throttle position sensor 21, a vehicle speed sensor 22, a hydraulic device 23, a fuel system ECU 24, a lean angle measuring device 25, a display device 26, and a sound device 27.

The ignition switch 19 starts or stops the engine. The ignition switch 19 is located, for example, near the steering handle. When the rider turns the ignition switch 19 on or off, the ignition switch 19 sends a signal indicating ON or OFF state to the lean control device 17 and the fuel system ECU 24.

The stand switch 20 detects whether the side stand and/or the center stand are put out or put in. When the stand switch 20 detects the side stand and/or the center stand put out or put in, the stand switch 20 sends a signal indicating the protruded or retracted state to the lean control device 17.

The throttle position sensor 21 detects the amount of rotation of the throttle grip made by the rider, i.e., the rotation angle of the throttle grip. The throttle position sensor 21 converts the detected rotation angle of the throttle grip into an electrical signal and sends the electrical signal to the fuel system ECU 24.

The vehicle speed sensor 22 measures the speed of the leaning vehicle 1. For example, the vehicle speed sensor 22 is provided for each of the wheels, and the rotation speeds of the two steerable wheels 14 and the one drive wheel 13 are separately measured. The vehicle speed sensor 22 converts the measured rotation speed into an electrical signal and sends the electrical signal to the hydraulic device 23.

The hydraulic device 23 receives the electrical signal from the vehicle speed sensor 22 and optimizes the transmission and the like. The hydraulic device 23 sends the signal obtained from the vehicle speed sensor 22 to the lean control device 17.

The fuel system ECU 24 controls a fuel injector that supplies fuel to the engine. The fuel system ECU 24 receives signals from the ignition switch 19 and the throttle position sensor 21 and generates information indicating the rotation angle of the throttle grip and the engine speed, and then, the fuel system ECU 24 sends the information to the lean control device 17.

The lean angle measuring device 25 is an IMU, for example. The lean angle measuring device 25 measures the lean angle (roll angle) and lean angle rate (roll rate) of the vehicle body 11. The lean angle measuring device 25 converts the detected lean angle and lean angle rate into electric signals and sends the signals to the lean control device 17.

The lean control device 17 includes a computing section 171 and a motor driving section 172.

The computing section 171 regularly receives signals and information from the ignition switch 19, the stand switch 20, the fuel system ECU 24, the hydraulic device 23 and the lean angle measuring device 25 and judges whether the condition for execution of the gravity compensation control and the condition for execution of the self-standing assist control are satisfied or not. Based on the judgement result, the computing section 171 determines which control should be carried out, the gravity compensation control or the self-standing assist control. Also, the computing section 171 receives the signals and information described above and judges whether the condition for a switch between the gravity compensation control and the self-standing assist control is satisfied or not. Based on the judgement result, the computing section 171 determines to conduct a switch between the gravity compensation control and the self-standing assist control. The computing section 171 sends the determination result to the motor driving section 172, the display device 26 and the sound device 27.

For example, when the condition for execution of the gravity compensation control is satisfied and when the condition for a switch of control is not satisfied, the computing section 171 sends information indicating that the gravity compensation control should be executed to the motor driving section 172. For example, when the condition for execution of the self-standing assist control is satisfied and when the condition for a switch of control is not satisfied, the computing section 171 sends information indicating that the self-standing assist control should be executed to the motor driving section 172. For example, when the condition for a switch of control is satisfied during execution of the gravity compensation control, the computing section 171 sends information indicating that the gravity compensation control should be switched to the self-standing assist control to the motor driving section 172.

The motor driving section 172 receives information from the computing section 171 and sends a control signal to the actuator 16. For example, the motor driving section 172 receives, from the computing section 171, information indicating that the gravity compensation control should be switched to the self-standing assist control, and then sends a control signal to instruct the actuator 16 to change the output torque.

The display device 26 receives a determination result from the computing section 171 and displays the currently executed control. The display device 26 is a display that displays, for example, speed and the like. The display device 26 may display a warning to attract the rider's attention based on the determination result received from the computing section 171. For example, when the gravity compensation control is switched to the self-standing assist control, the display device 26 makes an emphatic display of it.

The sound device 27 receives a determination result from the computing section 171 and sounds a warning to attract the rider's attention. For example, when the self-standing assist control is executed, the sound device 27 sounds a warning to inform the rider of it. The sound device 27 is, for example, a buzzer, a horn, or the like.

As described above, the lean control device 17 according to the present embodiment is cable of executing a plurality of controls that are different in the output torque when the leaning vehicle 1 is at a stop. While the leaning vehicle 1 is at a stop, with the self-standing assist control C2, the leaning vehicle 1 can stand by itself without any support from the rider. On the other hand, when the rider is about to start the leaning vehicle 1 or about to walk the leaning vehicle 1, by conducting a switch from the self-standing assist control C2 to the gravity compensation control C1, the rider can lean the leaning vehicle 1 freely to a certain degree. Thus, the leaning vehicle 1, when it is at a stop, can be assisted in standing by itself, and the rider can start the leaning vehicle 1 and can walk the leaning vehicle 1 easily.

In the above-described embodiment, at the time of a switch between the gravity compensation control C1 and the self-assisting control C2, the lean control device 17 may instruct the actuator 16 to make a change of the output torque between a value for the gravity compensation control C1 and a value for the self-standing assist control C2 at a specified time rate of change.

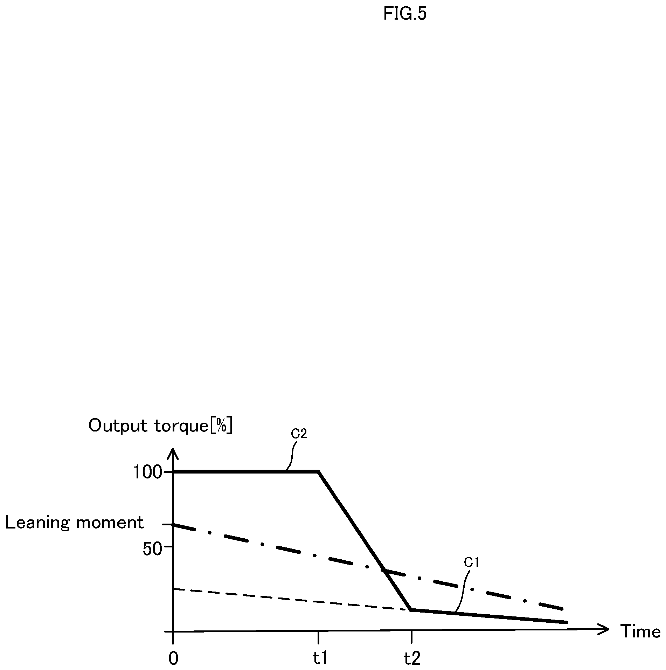

FIG. 5 is a chart showing the relationship between the output torque of the actuator controlled by the lean control device according to the present embodiment and the running time. In this example, the self-standing assist control C2 is executed from the start of running to a time point t1, and at the time point t1, the condition for a switch of control is satisfied. When the time t1 has passed since the start of running, the lean control device 17 switches from the self-standing assist control C2 to the gravity compensation control C1. In this regard, the lean control device 17 controls the actuator such that the output torque that has been output during the self-standing assist control C2 is decreased gradually for a period from the time point t1 to a time point t2 (for a period of time of t2 minus t1). The lean control device 17 controls the actuator such that the output torque becomes equal to the output torque for the gravity compensation control C1 at the time point t2. Then, at the time point t2, the switch from the self-standing assist control C2 to the gravity compensation control C1 is completed.

Thus, by gradually changing the output torque of the actuator, it is possible to prevent a sudden change of the output torque at the time of a switch between the gravity compensation control and the self-standing assist control. This makes it easier for the rider to keep the balance of the leaning vehicle.

The embodiments and modifications described above and/or illustrated by the drawings are to make the present teaching easier to understand and not to limit the concept of the present teaching. It is possible to adapt or alter the embodiments and modifications described above without departing from the scope thereof, which is defined by the appended claims.

### List of Reference Signs

1: leaning vehicle
11: vehicle body
12: prime mover
13: drive wheel
14: steerable wheel
15: link mechanism
151: parallelogram link
1511: upper cross member
1512: lower cross member
1513: left side member
1514: right side member
152: fork-type suspension
1521: left fork member
1522: right fork member
16: actuator
17: lean control device
171: computing section
172: motor driving section
18: steering mechanism
181: steering handle
19: ignition switch
20: stand switch
21: throttle position sensor
22: vehicle speed sensor
23: hydraulic device
24: fuel system ECU
25: lean angle measuring device
26: display device
27: sound device
C1: gravity compensation control
C2: self-standing assist control

## Claims

1. Alean control device (17) for installation in a leaning vehicle (1), the leaning vehicle (1) including at least three wheels (13, 14) and a prime mover (12), the at least three wheels (13, 14) including two steerable wheels (14) arranged side by side in a left-right direction, the leaning vehicle (1) configured to lean the steerable wheels (14) and a vehicle body (11) leftward when making a left turn and to lean the steerable wheels (14) and the vehicle body (11) rightward when making a right turn, the lean control device (17) being configured to control an actuator (16) that is capable of applying output torques to a vehicle body (11) in directions to lean the vehicle body (11) leftward and rightward and to raise the vehicle body (11) upright, wherein:
the lean control device (17) is capable of executing at least a gravity compensation control (C1) and a self-standing assist control (C2);
the lean control device (17) is configured to instruct the actuator (16) to conduct a switch between the gravity compensation control (C1) and the self-standing assist control (C2) when a condition for a switch of control is satisfied,
the gravity compensation control (C1) is executable when the leaning vehicle (1) is at a speed equal to or lower than a first speed, the gravity compensation control (C1) being to instruct the actuator (16) to apply output torques in directions towards a return to an upright state of the leaning vehicle (1),
the self-standing assist control (C2) is executable when the leaning vehicle (1) is at a speed equal to or lower than a second speed, the self-standing assist control (C2) being to instruct the actuator (16) to apply output torques to keep the leaning vehicle (1) in the upright state,
the output torques comprise a first output torque at least when the leaning vehicle (1) is at a stop and when the gravity compensation control (C1) is being executed, the first output torque being greater than zero and smaller than a leaning moment, the output torques comprise a second output torque at least when the leaning vehicle (1) is at a stop, when the vehicle body (11) leans at an angle within a substantially self-standing range and when the self-standing assist control (C2) is being executed, the second output torque being greater than the leaning moment, the leaning moment is a moment that acts on the vehicle body (11) due to gravity when the vehicle body (11) leans, and
the second speed is lower than the first speed,
the condition for the switch of control is that the leaning vehicle (1) is at a speed equal to or less than a threshold, the threshold being a value neither greater than the first speed nor greater than the second speed,
both of the gravity compensation control (C1) and the self-standing assist control (C2) are executable not only when the leaning vehicle (1) is at a stop but also when the leaning vehicle (1) is moving at a low speed which includes when a rider is walking the leaning vehicle (1).

2. The lean control device (17) according to claim 1, wherein
in at least either one of a case of switching from the gravity compensation control (C1) to the self-standing assist control (C2) or a case of switching from the self-standing assist control (C2) to the gravity compensation control (C1), the lean control device (17) is configured to instruct the actuator (16) to change the output torque gradually.

3. The lean control device (17) according to claim 1 or 2, wherein:
while the leaning vehicle (1) is decelerating and is in a state in which the gravity compensation control (C1) is being executed and the self-standing assist control (C2) is executable, upon receiving a specified input from a rider, the lean control device (17) is configured to instruct the actuator (16) to conduct a switch from the gravity compensation control (C1) to the self-standing assist control (C2); and
while the leaning vehicle (1) is accelerating and is in a state in which the self-standing assist control (C2) is being executed and the gravity compensation control (C1) is executable, when the self-standing assist control (C2) becomes inexecutable due to an increase in the speed of the leaning vehicle (1) to a speed higher than the second speed or when the lean control device (17) receives a specified input from a rider, the lean control device (17) is configured to instruct the actuator (16) to conduct a switch from the self-standing assist control (C2) to the gravity compensation control (C1).

4. The lean control device (17) according to any one of claims 1 to 3, wherein: while the speed of the leaning vehicle (1) is within the range from zero to the second speed, a rider can select whether to execute the gravity compensation control (C1) or the self-standing assist control (C2).

5. A leaning vehicle (1) comprising the lean control device (17) according to any one of claims 1 to 4.

## Patentansprüche

1. Neigungssteuerungsvorrichtung (17) zum Einbau in ein Neigungsfahrzeug (1), wobei das Neigungsfahrzeug (1) zumindest drei Räder (13, 14) und eine Antriebsmaschine (12) umfasst, wobei die zumindest drei Räder (13, 14) zwei steuerbare Räder (14) umfassen, die nebeneinander in einer Links-Rechts-Richtung angeordnet sind, wobei das Neigungsfahrzeug (1) dazu konfiguriert ist, die steuerbaren Räder (14) und einen Fahrzeugkörper (11) nach links zu neigen beim Links-Abbiegen und die steuerbaren Räder (14) und den Fahrzeugkörper (11) nach rechts zu neigen beim Rechts-Abbiegen, wobei die Neigungssteuerungsvorrichtung (17) dazu konfiguriert ist, ein Betätigungselement (16) zu steuern, das in der Lage ist, an einen Fahrzeugkörper (11) Ausgangsdrehmomente in Richtungen anzulegen, um den Fahrzeugkörper (11) nach links und nach rechts zu neigen und den Fahrzeugkörper (11) aufzurichten, wobei:
die Neigungssteuerungsvorrichtung (17) in der Lage ist, zumindest eine Schwerkraftkompensationssteuerung (C1) und eine Selbststehen-Unterstützung-Steuerung (C2) auszuführen;
die Neigungssteuerungsvorrichtung (17) dazu konfiguriert ist, das Betätigungselement (16) anzuweisen, ein Umschalten zwischen der Schwerkraftkompensationssteuerung (C1) und der Selbststehen-Unterstützung-Steuerung (C2) vorzunehmen, wenn eine Bedingung für eine Steuerungsumschaltung erfüllt ist,
die Schwerkraftkompensationssteuerung (C1) ausführbar ist, wenn das Neigungsfahrzeug (1) mit einer Geschwindigkeit gleich wie oder niedriger als eine erste Geschwindigkeit fährt, wobei die Schwerkraftkompensationssteuerung (C1) dazu dient, das Betätigungselement (16) anzuweisen, Ausgangsdrehmomente in Richtungen anzulegen, die eine Rückkehr des Neigungsfahrzeugs (1) in einen aufgerichteten Zustand bewirken,
die Selbststehen-Unterstützung-Steuerung (C2) ausführbar ist, wenn das Neigungsfahrzeug (1) mit einer Geschwindigkeit von gleich wie oder niedriger als eine zweite Geschwindigkeit fährt, wobei die Selbststehen-Unterstützung-Steuerung (C2) dazu dient, das Betätigungselement (16) anzuweisen, Ausgangsdrehmomente anzulegen, um das Neigungsfahrzeug (1) in dem aufgerichteten Zustand zu halten,
die Ausgangsdrehmomente ein erstes Ausgangsdrehmoment aufweisen, zumindest wenn das Neigungsfahrzeug (1) angehalten ist und wenn die Schwerkraftkompensationssteuerung (C1) ausgeführt wird, wobei das erste Ausgangsdrehmoment größer als null und kleiner als ein Neigungsmoment ist,
die Ausgangsdrehmomente ein zweites Ausgangsdrehmoment aufweisen, zumindest wenn das Neigungsfahrzeug (1) anhält, wenn sich der Fahrzeugkörper (11) in einem Winkel, der sich im Wesentlichen in einem Selbststehen-Bereich befindet, neigt und wenn die Selbststehen-Unterstützung-Steuerung (C2) ausgeführt wird, wobei das zweite Ausgangsdrehmoment größer als das Neigungsmoment ist,
das Neigungsmoment ein Moment ist, das aufgrund von Schwerkraft auf den Fahrzeugkörper (11) wirkt, wenn sich der Fahrzeugkörper (11) neigt, und
die zweite Geschwindigkeit niedriger als die erste Geschwindigkeit ist,
die Bedingung für die Steuerungsumschaltung ist, dass das Neigungsfahrzeug (1) mit einer Geschwindigkeit gleich wie oder niedriger als ein Schwellenwert fährt, wobei der Schwellenwert ein Wert ist, der weder größer als die erste Geschwindigkeit noch größer als die zweite Geschwindigkeit ist,
sowohl die Schwerkraftkompensationssteuerung (C1) als auch die Selbststehen-Unterstützung-Steuerung (C2) nicht nur ausführbar sind, wenn das Neigungsfahrzeug (1) anhält, sondern auch, wenn sich das Neigungsfahrzeug (1) mit einer niedrigen Geschwindigkeit bewegt, einschließlich des Falles, wenn ein Fahrer das Neigungsfahrzeug (1) schiebt.

2. Neigungssteuerungsvorrichtung (17) gemäß Anspruch 1, wobei:
in zumindest einem Fall, in dem von der Schwerkraftkompensationssteuerung (C1) zu der Selbststehen-Unterstützung-Steuerung (C2) umgeschaltet wird, oder einem Fall, in dem von der Selbststehen-Unterstützung-Steuerung (C2) zu der Schwerkraftkompensationssteuerung (C1) umgeschaltet wird, die Neigungssteuerungsvorrichtung (17) dazu konfiguriert ist, das Betätigungselement (16) anzuweisen, das Ausgangsdrehmoment graduell zu ändern.

3. Neigungssteuerungsvorrichtung (17) gemäß Anspruch 1 oder 2, wobei:
während das Neigungsfahrzeug (1) abbremst und in einem Zustand ist, in dem die Schwerkraftkompensationssteuerung (C1) ausgeführt wird und die Selbststehen-Unterstützung-Steuerung (C2) ausführbar ist, die Neigungssteuerungsvorrichtung (17) dazu konfiguriert ist, bei Empfangen einer spezifischen Eingabe von einem Fahrer, das Betätigungselement (16) anzuweisen, ein Umschalten von der Schwerkraftkompensationssteuerung (C1) zu der Selbststehen-Unterstützung-Steuerung (C2) vorzunehmen; und
während das Neigungsfahrzeug (1) beschleunigt und in einem Zustand ist, in dem die Selbststehen-Unterstützung-Steuerung (C2) ausgeführt wird und die Schwerkraftkompensationssteuerung (C1) ausführbar ist, wenn die Selbststehen-Unterstützung-Steuerung (C2) aufgrund eines Anstiegs der Geschwindigkeit des Neigungsfahrzeugs (1) auf eine Geschwindigkeit, die höher als die zweite Geschwindigkeit ist, unausführbar wird oder wenn die Neigungssteuerungsvorrichtung (17) eine spezifische Eingabe von einem Fahrer empfängt, die Neigungssteuerungsvorrichtung (17) dazu konfiguriert ist, das Betätigungselement (16) anzuweisen, ein Umschalten von der Selbststehen-Unterstützung-Steuerung (C2) zu der Schwerkraftkompensationssteuerung (C1) vorzunehmen.

4. Neigungssteuerungsvorrichtung (17) gemäß einem der Ansprüche 1 bis 3, wobei:
während die Geschwindigkeit des Neigungsfahrzeugs (1) innerhalb des Bereichs von null bis zu der zweiten Geschwindigkeit ist, ein Fahrer auswählen kann, ob die Schwerkraftkompensationssteuerung (C1) oder die Selbststehen-Unterstützung-Steuerung (C2) auszuführen ist.

5. Neigungsfahrzeug (1), das die Neigungssteuerungsvorrichtung (17) gemäß einem der Ansprüche 1 bis 4 aufweist.

## Revendications

1. Dispositif de commande d'inclinaison (17) pour installation dans un véhicule inclinable (1), le véhicule inclinable (1) incluant au moins trois roues (13, 14) et un moteur principal (12), les au moins trois roues (13, 14) incluant deux roues orientables (14) agencées côte à côte dans une direction gauche-droite, le véhicule inclinable (1) étant configuré pour incliner les roues orientables (14) et une carrosserie de véhicule (11) vers la gauche lorsque l'on fait un virage à gauche et pour incliner les roues orientables (14) et la carrosserie de véhicule (11) vers la droite lorsque l'on fait un virage à droite, le dispositif de commande d'inclinaison (17) étant configuré pour commander un actionneur (16) qui est apte à appliquer des couples de sortie à une carrosserie de véhicule (11) dans des directions pour incliner la carrosserie de véhicule (11) vers la gauche et vers la droite et pour lever la carrosserie de véhicule (11) à la verticale, dans lequel :
le dispositif de commande d'inclinaison (17) est apte à exécuter au moins une commande de compensation de gravité (C1) et une commande d'assistance autonome (C2) ;
le dispositif de commande d'inclinaison (17) est configuré pour ordonner à l'actionneur (16) de mener une commutation entre la commande de compensation de gravité (C1) et la commande d'assistance autonome (C2) lorsqu'une condition pour une commutation de commande est satisfaite,
la commande de compensation de gravité (C1) est exécutable lorsque le véhicule inclinable (1) est à une vitesse inférieure ou égale à une première vitesse, la commande de compensation de gravité (C1) servant à ordonner à l'actionneur (16) d'appliquer des couples de sortie dans des directions vers un retour à un état vertical du véhicule inclinable (1),
la commande d'assistance autonome (C2) est exécutable lorsque le véhicule inclinable (1) est à une vitesse inférieure ou égale à une deuxième vitesse, la commande d'assistance autonome (C2) servant à ordonner à l'actionner d'appliquer des couples de sortie pour garder le véhicule inclinable (1) dans l'état vertical,
les couples de sortie comprennent un premier couple de sortie au moins lorsque le véhicule inclinable (1) est à un stop et lorsque la commande de compensation de gravité (C1) est en cours d'exécution, le premier couple de sortie étant supérieur à zéro et plus petit qu'un moment d'inclinaison,
les couples de sortie comprennent un deuxième couple de sortie au moins lorsque le véhicule inclinable (1) est à un stop, lorsque la carrosserie de véhicule (11) s'incline à un angle dans une plage sensiblement autonome et lorsque la commande d'assistance autonome (C2) est en cours d'exécution, le deuxième couple de sortie étant supérieur au moment d'inclinaison,
le moment d'inclinaison est un moment qui agit sur la carrosserie de véhicule (11) en raison de la gravité lorsque la carrosserie de véhicule (11) s'incline, et
la deuxième vitesse est inférieure à la première vitesse,
la condition pour la commutation de commande est que le véhicule inclinable (1) est à une vitesse inférieure ou égale à un seuil, le seuil étant une valeur ni supérieure à la première vitesse ni supérieure à la deuxième vitesse,
la commande de compensation de gravité (C1) et la commande d'assistance autonome (C2) sont toutes les deux exécutables non seulement lorsque le véhicule inclinable (1) est à un stop mais également lorsque le véhicule inclinable (1) se déplace à une vitesse basse qui inclut le moment où un conducteur fait avancer le véhicule inclinable (1) en marchant.

2. Dispositif de commande d'inclinaison (17) selon la revendication 1, dans lequel
dans au moins un cas parmi un cas de commutation depuis la commande de compensation de gravité (C1) vers la commande d'assistance autonome (C2) ou un cas de commutation depuis la commande d'assistance autonome (C2) vers la commande de compensation de gravité (C1), le dispositif de commande d'inclinaison (17) est configuré pour ordonner à l'actionneur (16) de changer le couple de sortie progressivement.

3. Dispositif de commande d'inclinaison (17) selon la revendication 1 ou 2, dans lequel :
alors que le véhicule inclinable (1) ralentit et est dans un état dans lequel la commande de compensation de gravité (C1) est en cours d'exécution et la commande d'assistance autonome (C2) est exécutable, à réception d'une entrée spécifique provenant d'un conducteur, le dispositif de commande d'inclinaison (17) est configuré pour ordonner à l'actionneur (16) de mener une commutation depuis la commande de compensation de gravité (C1) vers la commande d'assistance autonome (C2) ; et
alors que le véhicule inclinable (1) accélère et est dans un état dans lequel la commande d'assistance autonome (C2) est en cours d'exécution et la commande de compensation de gravité (C1) est exécutable, lorsque la commande d'assistance autonome (C2) devient inexécutable en raison d'une augmentation de la vitesse du véhicule inclinable (1) à une vitesse plus élevée que la deuxième vitesse ou lorsque le dispositif de commande d'inclinaison (17) reçoit une entrée spécifique provenant d'un conducteur, le dispositif de commande d'inclinaison (17) est configuré pour ordonner à l'actionneur (16) de mener une commutation depuis la commande d'assistance autonome (C2) vers la commande de compensation de gravité (C1).

4. Dispositif de commande d'inclinaison (17) selon l'une quelconque des revendications 1 à 3, dans lequel :
alors que la vitesse du véhicule inclinable (1) est dans la plage allant de zéro à la deuxième vitesse, un conducteur peut sélectionner s'il faut exécuter la commande de compensation de gravité (C1) ou la commande d'assistance autonome (C2).

5. Véhicule inclinable (1) comprenant le dispositif de commande d'inclinaison (17) selon l'une quelconque des revendications 1 à 4.
